# EUROPÄISCHE PATENTSCHRIFT

(11) **EP 2 269 095 B1**
(45) Veröffentlichungstag und Bekanntmachung des Hinweises auf die Patenterteilung: **08.01.2014**
(21) Anmeldenummer: 09734617.5
(22) Anmeldetag: 22.04.2009
(51) Int. Cl.: G01V 3/10

(54) **EINRICHTUNG ZUR FESTSTELLUNG METALLISCH LEITENDER TEILE**
DEVICE FOR DETECTING METALLICALLY CONDUCTIVE PARTS
DISPOSITIF POUR DÉTECTER DES ÉLÉMENTS CONDUCTEURS MÉTALLIQUES

(30) Priorität: 23.04.2008 DE 102008020332
(43) Veröffentlichungstag der Anmeldung: 05.01.2011
(73) Patentinhaber: MESUTRONIC Gerätebau GmbH, 94259 Kirchberg i. Wald (DE)
(72) Erfinder: ARTINGER, Manfred, 94513 Schönberg (DE)
(74) Vertreter: Müller - Hoffmann & Partner
(86) Internationale Anmeldenummer: PCT/EP2009/002935
(87) Internationale Veröffentlichungsnummer: WO 2009/130019

(56) Entgegenhaltungen:
- DE-C1- 19 521 266
- US-A- 4 709 213

## Beschreibung

Die Erfindung betrifft eine Einrichtung zur Erzeugung eines Erkennungssignals beim Auftreten von metallisch leitenden Teilen in einem zumindest weitgehend nichtleitenden Förderstrom.

Einrichtungen dieser Art arbeiten meist in der Weise, dass mit einem Wechselstrom-generator über ein Sendespulensystem in einem zu überwachenden Abschnitt des Förderstroms ein elektromagnetisches Wechselfeld aufgebaut wird, dessen beim Passieren eines Teils ausgelöste Signaländerung durch ein Empfangsspulen-System erfasst werden und mit einer nachfolgenden Auswerteschaltung zur Ableitung eines Erkennungssignals dienen, das eine Information und/oder eine Ausscheidung des Teils auslöst. Derartige Einrichtungen sind beispielsweise durch die DE 37 14 009 A1 und die DE 40 171 780 A1 und den darin erwähnten Stand der Technik hinsichtlich ihrer Anwendung und ihres Aufbaus bekannt. Das Erkennungssignal dient dabei zur Betätigung von Schutzeinrichtungen, wie optischen und/oder akustischen Signalmitteln, von Abschalteinrichtungen der Fördereinrichtung, oder auch zur Umleitung des ein störendes Teil enthaltenden Förderstromes in ein Sammelgefäss oder dergleichen. Dabei sind die einzelnen Systemkomponenten wie eine Sensoreinheit, eine Auswerteschaltung, ein Ablaufsteuerung usw. meist zu einer Baugruppe zusammengefasst und über ein Leitungsnetz miteinander elektrisch verbunden. Das erschwert im Störungsfall nicht nur die Fehlersuche, sondern auch die Flexibilität, wenn die Gesamteinrichtung geänderten Arbeitsbedingungen angepasst werden soll.

Die DE 195 21 266 C1 offenbart eine Einrichtung zur Erzeugung eines Erkennungssignals beim Auftreten von metallisch leitenden Teilen in einem Förderstrom mit einer Sensoreinheit und einer Auswerteeinheit, die ein Erkennungssignal nur beim Passieren eines Teils abgibt. Weiterhin ist aus der US 4 709 213 ein Metalldetektor zur Detektion von metallischen Gegenständen unter dem Boden mit einer Verteilung der Systemkomponente in Baugruppen bekannt.

Der Erfindung liegt die Aufgabe zugrunde, den oben genannten Schwierigkeiten zu begegnen.

Dies wird bei einer Einrichtung zur Erzeugung eines Erkennungssignals beim Auftreten von metallisch leitenden Teilen in einem zumindest weitgehend nichtleitenden Förderstrom, bei der in einem Überwachungsabschnitt durch die Teile verursachte Änderungen des Magnetfeldes mittels einer Sensoreinheit erfasst und einer dieser zugeordneten Auswerteeinheit zur Ableitung eines Erkennungssignals zugeführt werden, das eine Information und/oder eine Ausscheidung des Teils auslöst, und bei der ferner die einzelnen Systemkomponenten zu Baugruppen zusammengefasst sind, dadurch erreicht, dass eine erste Schaltungsbaugruppe vorgesehen ist, welche die Sensoreinheit und die auf digitaler Basis arbeitende Auswerteschaltung umfasst, die ihrerseits so ausgebildet ist, dass sie ein Erkennungssignal nur beim Passieren eines Teils abgibt, dass eine zweite Schaltungsbaugruppe vorgesehen ist, der das Erkennungssignal aus der ersten Schaltungsbaugruppe als Eingangssignal zugeführt wird und auf der eine dem Steuersignal und Informations-Austausch dienende Steuerzentrale angeordnet ist, dass eine dritte Schaltungsbaugruppe vorgesehen ist, der das Erkennungssignal aus der ersten Schaltungsbaugruppe als Eingangssignal zugeführt wird und die eine Anzeigevorrichtung nebst zugehöriger Bedieneinheit für die Anzeige und die Einstellung des Betriebszustand der Gesamteinrichtung umfasst, dass ein Bus-System, vorzugsweise ein Ethernet-System vorgesehen ist, und dass die einzelnen Schaltungsbaugruppen mit entsprechenden Anschlüssen für dieses Bus-System versehen und über dieses zum Austausch von Einstell- und Informationssignalen untereinander verbunden sind.

Bei einer Einrichtung zur Erzeugung eines Erkennungssignals metallisch leitender Teile in einem zumindest weitgehend nichtleitenden Förderstrom, bei der die Sensoreinheit einen Wechselstromgenerator enthält, der über ein Sendespulensystem in einem zu überwachenden Abschnitt des Förderstroms ein elektromagnetisches Wechselfeld aufbaut, dessen beim Passieren eines Teils ausgelöste Feldänderungen durch ein Empfangsspulensystem erfasst und der Auswerteschaltung zur Ableitung des Erkennungssignal zugeführt werden, umfasst die erste Schaltungsbaugruppe den zur Spulenspeisung dienenden Wechselstromgenerator, den Empfänger für die Spulensignale und die Auswerteschaltung, die auf digitaler Basis arbeitet. Dabei ist es von Vorteil, wenn die erste Schaltungsbaugruppe in dem Spulengehäuse angeordnet ist, vorzugsweise in einem von außen zugänglichen, verschliessbaren Gehäuse. In diesem Zusammenhang ist es weiterhin von Vorteil, wenn alle Schaltungsbaugruppen in einem gemeinsamen, den Spulen zugeordneten Gerätegehäuse angeordnet sind.

In der Einrichtung zur Erzeugung eines Erkennungssignals beim Auftreten von metallisch leitenden Teilen in einem zumindest weitgehend nichtleitenden Förderstrom umfasst vorzugsweise die erste Schaltungsbaugruppe einen passiven Sensor, vor allem aus Hallgeneratoren oder Feldplatten, und die auf digitaler Basis arbeitende Auswerteschaltung.

Eine Weiterbildung der Erfindung besteht darin, dass die zweite Schaltungsbaugruppe mit der dritten Schaltungsbaugruppe in einem Gerätegehäuse angeordnet ist. Zweckmäßig ist es die Anzeigevorrichtung als Display mit Touchfeldern als Bedientasten bzw. Einstelltasten ausgezubilden.

Bei einer erfindungsgemäßen, besonderen Ausgestaltung der Einrichtung wird jede Schaltungsbaugruppe mit einem eigenen Steuermodul (Controller) für die Einstellung der Komponenten der Schaltungsbaugruppe versehen, die über das Bus-System von der Steuerzentrale aus einstellbar sind.

Wird für die Bus-Verbindung zwischen den Schaltungsbaugruppen als Kabelverbindung vorgesehen, so ist es vorteilhaft, wenn diese zusätzlich zur eigentlichen Bus-Leitung auch Leitungsadern für die Stromversorgung der einzelnen Schaltungsbaugruppen enthält.

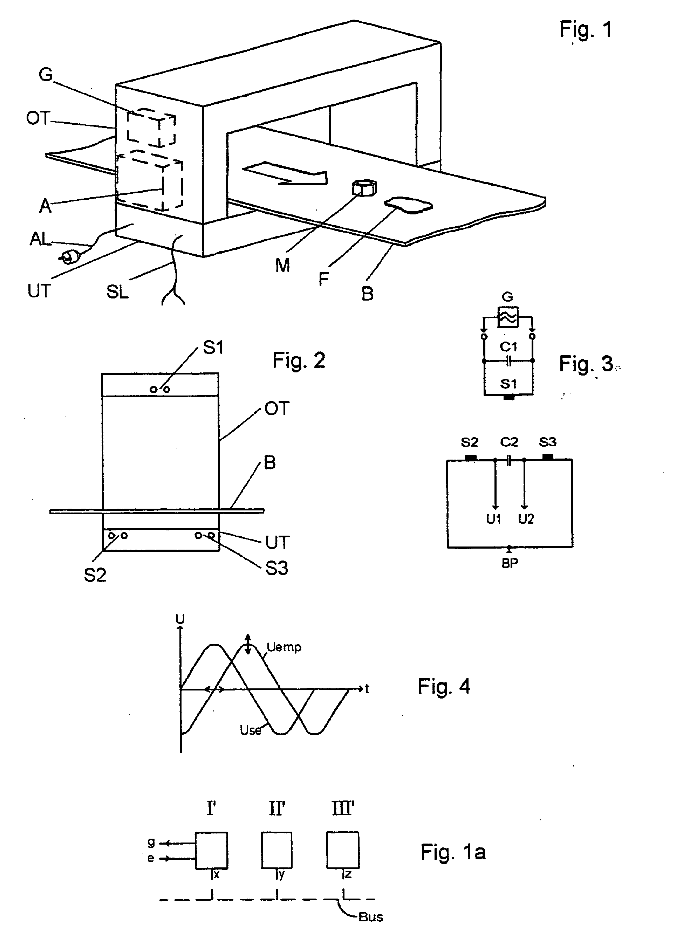

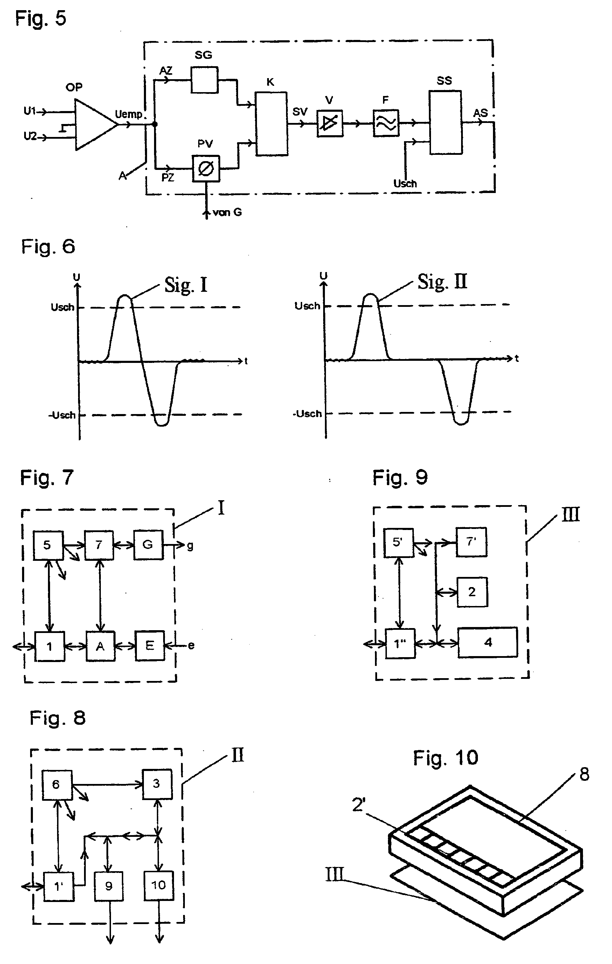

Nachstehend wird die Erfindung näher erläutert. Zum besseren Verständnis der Erfindung werden zunächst unter Verwendung der anliegenden Zeichnung anhand der Figuren 1 bis 6 das Prinzip und das grundsätzliche Aufbau-Schaltschema eines Metall-Suchgeräts der erwähnten Art erläutert. Diese Darstellung ist z.B. aus der DE 43 42 826 C2 bekannt. Anhand der weiteren Figuren 7 bis 10 wird dann die erfindungsgemäße Aufteilung der einzelnen Komponenten auf die einzelnen Schaltungsbaugruppen und deren Verbindung untereinander und mit anderen Komponenten behandelt.

In der Zeichnung zeigt:
- die Figur 1: die Ansicht einer Metalldetektions-Einrichtung, die ein Förderband umschließt,
- die Figur 2: einen Schnitt durch eine Metalldetektions-Einrichtung nach der Figur 1,
- die Figur 4: ein Schwingungsdiagramm zur Verdeutlichung der Wirkung von leitenden Teilen im Fördergutstrom auf das über das Spulensystem aufgenommene Signal,
- die Figur 5: das Blockschaltbild einer Schaltung zur Ableitung eines Erkennungssignals,
- die Figur 6: den zeitlichen Verlauf des beim Durchgang eines metallisch leitenden Teiles auftretenden Signals am Ausgang einer Schwellwert-Schaltung, die der Abgabe des Erkennungssignals dient
- die Figur 7: eine Ausführungsform der Schaltungsplatine 1,
- die Figur 8: eine Ausführungsform der Schaltungsplatine II,
- die Figur 9: eine Ausführungsform der Schaltungsplatine III,
- die Figur 10: eine besondere Ausführungsform der Schaltungsplatine III mit baulicher Vereinigung der Anzeigevorrichtung und des Bedienfeldes und die Figur 1a ein Blockschaltbild zur Erläuterung der Verbindung der einzelnen Schaltungsbaugruppen.

Die in den Figuren 1 und 2 schematisch dargestellte Einrichtung besteht aus zwei Teilen OT und UT, von denen das eine U-förmig und das andere als flaches Auflager ausgebildet ist. Die beiden Teile umschließen ein Förderband B, das in Richtung des aufgezeichneten Pfeiles das auf unerwünschte metallische Teile zu überprüfende Gut durch die Einrichtung transportiert. In dem Teil OT ist eine Sendespule S1 angeordnet. In dem Teil OT sind ferner ein die Sendespule mit Wechselstrom speisender Generator G und eine Schaltung A zur Ableitung eines Erkennungssignals von im Fördergut enthaltenen, metallisch leitenden Teilen angeordnet. Im Auflager UT sind zwei Empfangsspulen S2 und S3, in Förderrichtung versetzt, angeordnet. Ausführungsform und Anordnung der Spulen sind, ebenso wie die Gehäuseform und die Form und Art der Durchlassöffnung in an sich bekannter Weise dem Anwendungsfall angepasst. über nicht näher dargestellte Kontakte sind ihre Anschlüsse zu einer Schaltungsbaugruppe A im Teil OT geführt. Eine Anschlussleitung AL dient der Verbindung der Einrichtung mit der Betriebsstromversorgung. Eine Ausgangsleitung SL dient zur Weiterleitung eines durch ein festzustellendes Teil ausgelösten Erkennungssignals ES an eine der einleitend erwähnten Schutzvorrichtungen.

In der Regel ist, wie in der Figur 3 dargestellt, die Sendespule S1 durch einen Kondensator C1 und das Spulenpaar S2. S3 durch einen Kondensator C2 jeweils zu einem elektrischen Schwingkreis vervollständigt. Die beiden Schwingkreise S1, C1 bzw. S2, S3, C2 sind so abgestimmt, dass sie ein auf die Frequenz des Wechselstromes abgestimmtes Bandfilter bilden, der vom Generator G zugeführt wird. Durch die Unterteilung der Spule und damit der Induktivität im Schwingungskreis S2, S3, C2 ist es möglich zwei, gegenüber dem Bezugspotential BP gegenphasige Signale U1 und U2 abzunehmen und der Auswerteschaltung A zuzuführen.

In der Figur 4 ist der Einfluss des Durchgangs eines durch das Förderband an den Spulen S2 und S3 vorbeibewegten, metallisch leitenden Teiles dargestellt. Die von dem Wechselfeld der Spule verursachten Wirbelstrom verändern sowohl die Amplitude als auch die Phasenlage des über das Spulenpaar S2 und S3 empfangenen Signals Uemp, das ohne solche Feldstörungen um 90° gegen Use phasenverschoben ist. Die Änderungen sind durch Pfeile angedeutet. Die Amplitudenveränderung wird über einen Amplitudenzweig AZ und die Phasenänderung über einen Phasenzweig PZ ausgewertet.

Die Schaltung A beginnt, wie die Figur 5 zeigt, mit einem - als Empfänger dienenden - durch einen sogenannten Operationsverstärker gebildeten Differenz-Verstärker OP, an dessen Ausgang eine Aufteilung in den Amplitudenzweig AZ und den Phasenzweig PZ vorgenommen ist. Im Amplitudenzweig AZ wird mittels einer Gleichrichterstufe SG der Spitzenwert des Signales Uemp bestimmt. Im Phasenzweig PZ ist ein Phasendiskriminator PV eingefügt, dem als Phasenbezugssignal das Signal Use des Generators G zugeführt wird. Die Ausgangsspannungen von SG und PV werden einem Komparator K mit einstellbarer Gewichtung zugeführt. Im einfachsten Fall ist dies ein Subtrahierer mit einem Amplitudenregler in zumindest einem seiner beiden Eingänge.

Das Ausgangssignal des Komparators K wird, gegebenenfalls nach einer Zwischenverstärkung in einem Verstärker V, über ein Filter F einer Schwellwertschaltung SS eingespeist, an deren Ausgang dann das Erkennungssignal AS eines metallisch leitenden Teiles entnehmbar ist, das als störend zu klassifizieren ist. Zu diesem Zweck wird der Schwellwertschaltung SS eine im Wert einstellbare Bezugsspannung Usch zugeführt, bei deren Überschreiten das Erkennungssignal AS im Ausgang von der Schwellwertschaltung SS auftritt. Das Filter F unterdrückt den Gleichspannungsanteil im Ausgang von K und begrenzt das Frequenzspektrum auf den für die Auswertung vorgesehenen Bereich. Beim Transport eines metallisch leitenden Teiles durch die vorbeschriebene Einrichtung nach den Figuren 1 bis 4 tritt im Eingang von dem Verstärker V bzw. von der Schwellwertschaltung SS ein Signal auf, das einen für das bewegte Teil charakteristischen Amplitudenverlauf zeigt. Ist das Teil kurz gegenüber dem Abstand der Spulen S2 und S3, entsteht bei jedem Passieren einer der beiden Spulen ein Signal, wie es in der Figur 6 mit Sig. 1 bezeichnet ist. Ist hingegen das Teil demgegenüber lang, so ist der Verlauf von dem Erkennungssignal AS etwa entsprechend Sig. 2.

In der Figur 6 ist die Wirkung der Bezugsspannung Usch in der Schwellwertschaltung SS gezeigt. Nur bei Überschreiten der Schwellenwerte tritt ein Ausgangssignal AS auf, das als Erkennungssignal dient. Solche Schwellwertschaltungen sind an sich bekannt. Durch die Schwellwertschaltung wird auch ein Einfluss des Grundrauschens, das in der Figur 6 als den eigentlichen Signalen vorausgehend und nachfolgend angedeutet ist, wirksam unterdrückt.

Der Schaltungsabschnitt vom Ausgang des Operationsverstärkers OP bis zum Ausgang der Schwellwertschaltung SS bildet sozusagen die Auswerteeinrichtung.

Die Einrichtung nach der Figur 1 verwendet sekundärseitig ein aus zwei Spulen bestehendes Spulensystem. Man kann auch in an sich bekannter Weise mit nur einer Spule arbeiten. Ebenso ist es in manchen Fällen möglich auch auf den Generator zu verzichten. Wenn man beispielsweise bei der Prüfung von Zahnrädern auf Gleichförmigkeit der einzelnen Zähne aus der Rotation des Zahnrads eine entsprechende Schwingung in einer gesonderten Stufe ableitet und mit den mittels einer Spule oder optisch aus den vorbeigleitenden metallischen, meist ferromagnetischen Zahnradzähnen in Relation setzt, dann kommt man zu vergleichbaren Verhältnissen.

Die Verarbeitung der Signale Use und Uemp erfolgt bei älteren Anlagen meist mittels sogenannter analog arbeitender Baugruppen. Wandelt man diese Signale vor ihrer Verarbeitung in der Auswerteschaltung durch Analog/Digital-Wandler in DigitalSignale um, so kann die Verarbeitung auf digitaler Basis durchgeführt werden. Die entsprechenden Bausteine, wie ein meist als Subtrahierer ausgebildeter Komparator K, ein Verstärker V, ein Filter und eine Schwellwertschaltung sind im Handel als sogenannte ICs bekannt und erhältlich. Beim Erfindungsgegenstand ist eine digitale Signalverarbeitung vorgesehen.

Die Auswerteschaltung A beginnt, wie die Figur 5 zeigt, hinter dem als Empfänger dienenden, durch einen sogenannten Operationsverstärker gebildeten Differenz-Verstärker OP, an dessen Ausgang eine Aufteilung in einen Amplitudenzweig AZ und einen Phasenzweig PZ vorgenommen ist. Im Amplitudenzweig AZ wird mittels einer Stufe SG der Betragswert des Signales Uemp bestimmt, der das Amplituden-Änderungssignal darstellt. Im Phasenzweig PZ ist ein Phasendiskriminator PV eingefügt, der als Phasenbezugssignal das Signal Use des Generators G erhält. Am Ausgang von dem Phasendiskriminator PV steht das Phasen-Änderungssignal an.

In der Figur 6 ist der Einfluss des Durchgangs eines durch das Förderband an der Spule S2 vorbeibewegten, metallisch leitenden Teiles schematisch dargestellt. Die von dem Wechselfeld Use der Spule S1 in dem Teil verursachten Wirbelströme verändern sowohl die Amplitude als auch die Phasenlage des über das Spulenpaar S2 und S3 empfangenen Signals Uemp, das ohne solche Feldstörungen um 90° gegen Use phasenverschoben ist. Die Änderungsbereiche sind durch Pfeile angedeutet.

Die weitere Verarbeitung besteht darin, dass das Amplituden- und das Phasen-Änderungssignal vektoriell addiert werden. Hierzu wird eine 90° Phasenverschiebung eingeführt, beispielsweise dadurch, dass, wie in der Figur 5 gezeigt, in den Phasenzweig ein 90° Phasenschieber eingefügt wird. Die gegenseitig um 90° phasenverschobenen Signale werden in einem, im Komparator enthaltenen Summierer zu einem vektoriellen Summensignal SV zusammengesetzt. Dieses weist nicht nur einen vom Material des im Förderstrom abhängigen Phasenwinkel α beziehungsweise 0° zu den Änderungssignalen auf. Der Betrag des Summenvektors SV ist vielmehr auch ein Kriterium für die Materialmenge des zu ermittelnden Teiles.

Bei dem Ausführungsbeispiel der Erfindung, deren Schaltungsbaugruppen in den Figuren 7, 8 und 9 wiedergegeben sind, ist eine Aufteilung des Gesamtsystems in drei mit den einzelnen Schaltungskomponenten bestückte Schaltungsplatinen bzw. Schaltungsbaugruppen I. II und III vorgesehen.

Die erste Schaltungsbaugruppe bzw. Platine I (Figur 7) umfasst einen Sender G, den Empfänger E (entspricht OP in Figur 5) und eine Auswerteschaltung A (entspricht dem mit einer strichpunktierten Linie umrandeten Schaltungsabschnitt A in der Figur 5). Als Übergabestelle zur Verbindung mit den anderen Schaltungsbaugruppen bzw. Platinen ist sie mit einer Schnittstelle 1 zu einem Bus-System, vorzugsweise einem Ethernet-System versehen, über die Signale von anderen Schaltungsbaugruppen empfangen bzw. zu anderen Schaltungsbaugruppen geleitet werden.

Die zweite Schaltungsbaugruppe bzw. Platine II (Figur 8), die auch als zentrale Ablaufsteuerung bezeichnet werden kann, enthält einen der Steuerung des Gesamtablaufs dienenden Steuerungsbaustein 3, der über ein Bedienfeld 2 (siehe Figur 9) eingegebene bzw. eingestellte Informationen für die anderen Schaltungsbaugruppen aufbereitet und über eine Schnittstelle 1' weiterleitet, beziehungsweise Informationen von den anderen Schaltungsbaugruppen erhält. Als Eingangssignal wird ihr über das Bus-System das Erkennungssignal aus der Schaltungsbaugruppe I zugeführt.

Die dritte Schaltungsplatine III (Figur 9) ist mit einer Anzeigevorrichtung 4, wie einem LCD-Display versehen, auf der die jeweils eingestellten Werte und gegebenenfalls auch der Augenblickszustand der Gesamteinrichtung in an sich bekannter Weise für das Betriebspersonal angezeigt wird. Auch diese Schaltungsbaugruppe ist mit einer Schnittstelle 1" zum Anschluss an das Bus-System versehen, über die der Informations- und Steuersignal-Austausch mit den anderen Schaltungsbaugruppen erfolgt.

Es ergibt sich damit ein Gesamtschaltungsschema, wie die Figur 1a zeigt. Der Daten- bzw. Signalaustausch zwischen den einzelnen Schaltungsbaugruppen erfolgt mittels eines digital arbeitenden Bus-Systems, vorzugsweise durch ein Ethernet-System, über die Schnittstellen x, y und z, die mit den Schaltungskomponenten 1, 1' und 1" verbunden sind. Das wird dadurch erleichtert, dass die Schaltungsbaugruppen mit digital arbeitenden Komponenten versehen sind. Lediglich der Sender der Schaltungsbaugruppe I gibt ein Analogsignal ab. Er ist aber mit einer digital arbeitenden Frequenzeinstellung versehen und daher ebenfalls digital ansteuerbar. Derartige Sender bzw. Oszillatoren sind auch unter dem Fachbegriff "Frequenzsynthesizer" bekannt und im Handel erhältlich.

Jeder der drei Schaltungsbaugruppen ist ferner noch ein Stromversorgungsbaustein zugeordnet, der die meist unterschiedlichen Betriebsspannungen für die einzelnen Komponenten liefert. Die Stromversorgungsbausteine 5 und 5' der Schaltungsplatinen I und III erhalten ihre Speise- bzw. Betriebsspannung von einer zentralen Stromversorgung 6, die beim Ausführungsbeispiel auf der Schaltungsplatine II angeordnet ist und aus dem öffentlichen Stromnetz gespeist werden kann.

Beim Ausführungsbeispiel sind den Schaltungsplatinen jeweils noch Steuerungsbausteine 7, 7' sogenannte "Controiler" - zugeordnet, in denen jeweils die über das Bus-System der betroffenen Schaltungsplatine zugeführten Einstellwerte abgespeichert werden, mit denen dann die entsprechende Einstellung der verschiedenen Komponenten der jeweiligen Schaltungsplatine veranlasst wird. Durch die Abspeicherung wird erreicht, dass nach erfolgter Einstellung der Komponenten auf der einzelnen Schaltungsplatine die Schaltungsbaugruppe II hinsichtlich der Komponenteneinstellung inaktiv gesetzt werden kann und die Schaltungsplatine II im Wesentlichen nur noch für die Anlagen-Überwachung und die Information des Einrichtungsbetreibers tätig sein muss. Die Schaltungsplatine II ist hierfür mit zwei Schnittstellen 9 und 10 versehen, von denen beispielsweise die Schnittstelle 9 zum Anschluss von weiteren Geräten des Betreibers und die Schnittstelle 10 zum Anschluss von Service-Einrichtungen verwendet wird.

Besonders günstig ist es, wenn die Anzeigevorrichtung mit sogenannten, an sich bekannten "Touch-Feldern" versehen ist, weil dann der Datenaustausch und Signal-Fluss vereinfacht wird. Dies ist schematisch in der Figur 10 dargestellt. Ein LCD-Display 8 mit Touch-Feldern 2' ist auf der Schaltungsbaugruppe III befestigt und über nicht dargestellte elektrische Leitungen mit dieser verbunden.

Die Verbindung der einzelnen Schaltungsbaugruppen über ein Bus-System bringt nicht nur eine Minderung des Einflusses von äußeren Störungen. Vielmehr lässt sich über das Bus-System dadurch sozusagen die Schaltungsbaugruppe "Arbeitsplatz-Bedienfeld/Anzeigevorrichtung" von der Gesamteinrichtung an eine arbeitsökonomisch günstige Stelle verlagern ohne einen erhöhten Aufwand betreiben zu müssen.

Die einzelnen Schaltungsbaugruppen werden, wie beispielsweise die Figur 1 zeigt, meist in das sogenannte Detektorgehäuse eingebaut. Die erfindungsgemäße Ausgestaltung ermöglicht es in einfacher Weise, die einzelnen Schaltungsbaugruppen der Gesamtanlage nach ergonomischen Gesichtspunkten in der Gesamtanlage anzuordnen. So ist es möglich, die Schaltungsbaugruppe mit dem Generator, dem Empfänger und der Auswerteschaltung in einer entsprechenden, von außen zugänglichen, mit einem Gehäusedeckel verschließbaren Aussparung des Detektorgehäuses und das Bedienfeld zusammen mit der Anzeigevorrichtung in einem eigenen Gehäuse an einem für das Bedienpersonal gut zugänglichen Ort anzuordnen. Hinzu kommt, dass der Einfluss von Störfeldern auf die Gesamtschaltung wesentlich vermindert wird.

### Bezugszeichen-Übersicht

- A: → Schaltung zur Ableitung eines Erkennungssignals
- AL: → Anschlussleitung für die Stromversorgung
- AZ: → Amplitudenzweig
- B: → Förderband
- C1, C2: → Kondensatoren
- G: → Wechselstrom-Generator
- OP: → Differenz-Verstärker bzw. Operationsverstärker
- OT: → Oberteil einer Einrichtung zur Erkennung von Teilen
- PV: → Phasendiskriminator
- PZ: → Phasenzweig
- S1: → Sendespule zur Feld-Erzeugung
- S2, S3: → Empfangsspulen für das elektromagnetische Feld
- SG: → Gleichrichterstufe im Amplitudenzweig AZ
- SS: → Erkennungssignal-Stufe
- SV: → vektorielles Summensignal
- U1, U2: → an den Spulen S2 bzw. S3 abgenommene Signale
- Uemp: → Empfangssignal am Ausgang des Differenzverstärkers OP
- Use: → Signal des Generators G
- UT: → Unterteil einer Einrichtung zur Erkennung von Teilen
- 1, 1'. 1": → Schnittstellen für das Bus-System
- 2: → Bedienfeld
- 2': → Touch-Bedienfeld
- 3: → zentrale Steuereinheit
- 4: → nzeigevorrichtung
- 5: → Stromversorgung der Schaltungsbaugruppe I
- 5': → Stromversorgung der Schaltungsbaugruppe III
- 6: → zentrale Stromversorgung, die 5 und 5' speist
- 7: → interne Ablaufsteuerung von I
- 7': → interne Ablaufsteuerung von III
- 8: → LCD-Display (Anzeigevorrichtung)
- 9: → Schnittstelle
- 10: → Schnittstelle
- I: → erste Schaltungsbaugruppe
- II: → zweite Schaltungsbaugruppe
- III: → dritte Schaltungsbaugruppe

## Patentansprüche

1. Einrichtung zur Erzeugung eines Erkennungssignals beim Auftreten von metallisch leitenden Teilen in einem zumindest weitgehend nichtleitenden Förderstrom, bei der in einem Überwachungsabschnitt durch die Teile verursachte Änderungen des Magnetfeldes mittels einer Sensoreinheit (G, E) erfasst und einer dieser zugeordneten Auswerteeinheit (A) zur Ableitung eines Erkennungssignals zugeführt werden, das eine Information und/oder eine Ausscheidung des Teils auslöst, und bei der ferner die einzelnen Systemkomponenten zu Baugruppen zusammengefasst sind, **dadurch gekennzeichnet, dass** eine erste Baugruppe (I) vorgesehen ist, welche die Sensoreinheit (G, E) und die auf digitaler Basis arbeitende Auswerteschaltung (A) umfasst, die ihrerseits so ausgebildet ist, dass sie ein Erkennungssignal nur beim Passieren eines Teils abgibt, dass eine zweite Schaltungsbaugruppe (II) vorgesehen ist, auf der eine dem Steuersignal- und Informations-Austausch dienende Steuerzentrale (3) angeordnet ist, dass eine dritte Schaltungsbaugruppe (III) vorgesehen ist, der das Erkennungssignal aus der ersten Schaltungsbaugruppe (I) als Eingangssignal zugeführt wird und die eine Anzeigevorrichtung (4) nebst zugehöriger Bedieneinheit (2) für die Anzeige und die Einstellung des Betriebszustands der Gesamteinrichtung umfasst, dass ein Bus-System, vorzugsweise ein Ethernet-System vorgesehen ist, und dass die einzelnen Schaltungsbaugruppen (I. II, III) mit entsprechenden Anschlüssen für dieses Bus-System versehen und über dieses zum Austausch von Einstell- und Informationssignalen untereinander verbunden sind.

2. Einrichtung zur Erzeugung eines Erkennungssignals beim Auftreten von metallisch leitenden Teilen in einem zumindest weitgehend nichtleitenden Förderstrom nach Anspruch 1, bei der die Sensoreinheit (G, E) einen Wechselstromgenerator (G) enthält, der über ein Sendespulensystem (S1) in einem zu überwachenden Abschnitt des Förderstroms ein elektromagnetisches Wechselfeld aufbaut, dessen beim Passieren eines Teils ausgelöste Feldänderungen durch ein Empfangsspulensystem (S2, S3) erfasst und der Auswerteschaltung (A) zur Ableitung des Erkennungssignals zugeführt werden, **dadurch gekennzeichnet, dass** die erste Schaltungsbaugruppe (I) den zur Spulenspeisung dienenden Wechselstromgenerator (G), den Empfänger (E) für die Spulensignale und die Auswerteschaltung (A), die auf digitaler Basis arbeitet, umfasst.

3. Einrichtung nach Anspruch 2, **dadurch gekennzeichnet, dass** die erste Schaltungsbaugruppe (I) in dem Spulengehäuse angeordnet ist, vorzugsweise in einem von außen zugänglichen, verschließbaren Gehäuse.

4. Einrichtung zur Erzeugung eines Erkennungssignals beim Auftreten von metallisch leitenden Teilen in einem zumindest weitgehend nichtleitenden Förderstrom nach Anspruch 1, **dadurch gekennzeichnet, dass** die erste Schaltungsbaugruppe (I) eine passive Sensoreinheit (G, E) mit Hallgeneratoren oder magnetischen Feldplatten und die auf digitaler Basis arbeitende Auswerteschaltung (A) umfasst.

5. Einrichtung nach einem der vorhergehenden Ansprüche, **dadurch gekennzeichnet, dass** die zweite Schaltungsbaugruppe (II) mit der dritten Schaltungsbaugruppe (III) in einem Gerätegehäuse angeordnet ist.

6. Einrichtung nach Anspruch 2, **dadurch gekennzeichnet, dass** alle Schaltungsbaugruppen (I, II, III) in einem gemeinsamen, den Spulen zugeordneten Gerätegehäuse angeordnet sind.

7. Einrichtung nach einem der vorhergehenden Ansprüche, **dadurch gekennzeichnet, dass** die Anzeigevorrichtung (A) als Display mit Touchfeldern (2') als Bedientasten bzw. Einstelltasten ausgebildet ist.

8. Einrichtung nach einem der vorhergehenden Ansprüche, **dadurch gekennzeichnet, dass** jede Schaltungsbaugruppe (I, II, III) mit einem eigenen Steuermodul (Controller) für die Einstellung der Komponenten der Schaltungsbaugruppe zugeordnet ist, und dass die Steuermodule über das Bus-System von der Steuerzentrale (3) aus einstellbar sind.

9. Einrichtung nach einem der vorhergehenden Ansprüche, **dadurch gekennzeichnet, dass** die Busverbindung zwischen den Schaltungsbaugruppen (I, II, III) als Kabelverbindung ausgebildet ist, die zusätzlich zur eigentlichen Bus-Leitung auch Leitungsadern für die Stromversorgung der einzelnen Schaltungsbaugruppen (I, II, III) enthält.

## Claims

1. Facility for generating a detection signal upon the presence of metallic-conducting parts in a conveyed flow that is at least largely nonconductive, in which variations of the magnetic field caused in a monitoring section by the parts are detected by means of a sensor unit (G, E) and guided to an associated analytical unit (A) for derivation of a detection signal that triggers an information and/or elimination of said part, and in which the individual system components are further combined into modules, **characterized in that** a first module (I) is provided which comprises the sensor unit (G, E) and the digital-type analytical circuit (A), which in turn is designed such that it emits a detection signal only upon passage of a part, **in that** a second circuit module (II) is provided on which is arranged a control center (3) that serves for control signal and information exchange, **in that** a third circuit module (III) is provided to which the detection signal from the first circuit module (I) is supplied as input signal and which comprises a display facility (4) including an associated control unit (2) for the display and the setting of the operating status of the overall facility, **in that** a bus system, preferably an Ethernet system, is provided, and **in that** the individual circuit modules (I, II, III) are provided with appropriate connections for said bus system and are connected by means thereof for the exchange of setting and information signals.

2. Facility for generating a detection signal upon the presence of metallic-conductive parts in a conveyed flow that is at least largely nonconductive according to claim 1, in which the sensor unit (G, E) contains an alternating current generator which establishes via a transmitter coil system (S1) an alternating electromagnetic field in a section of the conveyed flow, which is to be monitored, whereby the variations of said alternating electromagnetic field that are triggered upon passage of a part are detected by a receiver coil system (S2, S3) and supplied to the analytical circuit (A) for derivation of the detection signal, **characterized in that** the first circuit module (I) comprises the alternating current generator (G) that serves to supply the coils, the receiver (E) for the coil signals, and the analytical circuit (A) that is of a digital type.

3. Facility according to claim 2, **characterized in that** the first circuit module (I) is arranged in the coil housing, preferably in a housing that is accessible from outside and can be sealed.

4. Facility for generating a detection signal upon the presence of metallic-conductive parts in a conveyed flow that is at least largely nonconductive according to claim 1, **characterized in that** the first circuit module (I) comprises a passive sensor unit (G, E) with Hall generators or magnetic field plates and the digital-type analytical circuit (A).

5. Facility according to any one of the preceding claims, **characterized in that** the second circuit module (II) and the third circuit module (III) are arranged in one device housing.

6. Facility according to claim 2, **characterized in that** all circuit modules (I, II, III) are arranged in one device housing that is specifically dedicated to the coils.

7. Facility according to any one of the preceding claims, **characterized in that** the display facility (A) is provided as display with touch-fields (2') as control keys and/or setting keys.

8. Facility according to any one of the preceding claims, **characterized in that** each circuit module (I, II, III) has a control module (controller) for setting the components of the circuit module assigned to it, and **in that** the control module can be set from the control center (3) by means of the bus system.

9. Facility according to any one of the preceding claims, **characterized in that** the bus connection between the circuit modules (I, II, III) is provided in the form of a cable connection, which also contains conductors for supplying power to the individual circuit modules (I, II, III) in addition to the actual bus cable.

## Revendications

1. Dispositif pour produire un signal de détection en présence d'éléments conducteurs métalliques dans un écoulement d'acheminement au moins en grande partie non conducteur, avec lequel les variations du champ magnétique provoquées par les éléments dans une section de surveillance sont détectées à l'aide d'une unité formant capteur (G, E) et sont transmises à une unité d'analyse (A) associée à celle-ci, pour dériver un signal de détection qui déclenche une information et/ou une élimination de l'élément, et avec lequel les composants de système individuels sont par ailleurs réunis en blocs, **caractérisé en ce qu'**il est prévu un premier bloc (I) qui comprend l'unité formant capteur (G, E) et le circuit d'analyse (A) fonctionnant sur une base numérique et qui est lui-même conçu pour émettre un signal de détection seulement lors du passage d'un élément, **en ce qu'**il est prévu un deuxième bloc de montage (II) sur lequel est disposé un central de commande (3) servant à l'échange de signaux de commande et d'informations, **en ce qu'**il est prévu un troisième bloc de montage (III) auquel le signal de détection est transmis sous forme de signal d'entrée à partir du premier bloc de montage (I) et qui comprend un dispositif d'affichage (4) en plus d'une unité de commande associée (2), pour l'affichage et le réglage de l'état de fonctionnement de l'ensemble du dispositif, **en ce qu'**il est prévu un système de bus, de préférence un système Ethernet, et **en ce que** les blocs de montage individuels (I, II, III) sont pourvus de raccordements correspondants pour ce système de bus et sont reliés entre eux par celui-ci pour échanger des signaux de réglage et d'informations.

2. Dispositif pour produire un signal de détection en présence d'éléments conducteurs métalliques dans un écoulement d'acheminement au moins en grande partie non conducteur selon la revendication 1, avec lequel l'unité formant capteur (G, E) contient un générateur de courant alternatif (G) qui forme un champ alternatif électromagnétique, par l'intermédiaire d'un système de bobine émettrice (S1) dans une section à surveiller de l'écoulement d'acheminement, dont les variations de champ déclenchées lors du passage d'un élément sont détectées par un système de bobine réceptrice (S2, S3) et sont transmises au circuit d'analyse (A) pour dériver le signal de détection, **caractérisé en ce que** le premier bloc de montage (1) comprend le générateur de courant alternatif (G) qui sert à alimenter les bobines, le récepteur (E) pour les signaux de bobines, et le circuit d'analyse (A) qui fonctionne sur une base numérique.

3. Dispositif selon la revendication 2, **caractérisé en ce que** le premier bloc de montage (I) est disposé dans le boîtier de bobines, de préférence dans un boîtier apte à être fermé et accessible de l'extérieur.

4. Dispositif pour produire un signal de détection en présence d'éléments conducteurs métalliques dans un écoulement d'acheminement au moins en grande partie non conducteur selon la revendication 1, **caractérisé en ce que** le premier bloc de montage (I) comprend une unité formant capteur passive (G, E) avec des générateurs de Hall ou des magnétorésistances et le circuit d'analyse (A) qui fonctionne sur une base numérique.

5. Dispositif selon l'une des revendications précédentes, **caractérisé en ce que** le deuxième bloc de montage (II) est disposé avec le troisième bloc de montage (III) dans un boîtier d'appareil.

6. Dispositif selon la revendication 2, **caractérisé en ce que** tous les blocs de montage (I, II, III) sont disposés dans un boîtier d'appareil commun qui est associé aux bobines.

7. Dispositif selon l'une des revendications précédentes, **caractérisé en ce que** le dispositif d'affichage (A) est conçu comme un affichage avec des zones tactiles (2') comme touches de commande ou de réglage.

8. Dispositif selon l'une des revendications précédentes, **caractérisé en ce que** chaque bloc de montage (I, II, III) est associé à un son propre module de commande (dispositif de commande) pour le réglage des composants du bloc de montage, et **en ce que** les modules de commande sont aptes à être réglés par l'intermédiaire du système de bus à partir du central de commande (3).

9. Dispositif selon l'une des revendications précédentes, **caractérisé en ce que** la liaison par bus entre les blocs de montage (I, II, III) est conçue comme une liaison par câbles qui contient aussi, en plus du bus proprement dit, des conducteurs pour l'alimentation électrique des blocs de montage individuels (I, II, III).
